(19) Europäisches Patentamt
European Patent Office
Office européen des brevets

(11) **EP 4 202 085 A2**

(12) **EUROPEAN PATENT APPLICATION**

(43) Date of publication:
**28.06.2023 Bulletin 2023/26**

(21) Application number: **22193711.3**

(22) Date of filing: **02.09.2022**

(51) International Patent Classification (IPC):
***C25D 1/04*** *(2006.01)*   ***C25D 3/38*** *(2006.01)*

(52) Cooperative Patent Classification (CPC):
**C25D 1/04; C25D 3/38**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2021 PCT/EP2021/087640**

(71) Applicant: **Circuit Foil Luxembourg
9559 Wiltz (LU)**

(72) Inventors:
• **Moon, Honggi
  L-9559 Wiltz (LU)**
• **Kim, Sangbeom
  L-9559 Wiltz (LU)**
• **Kim, Seunghwan
  L-9559 Wiltz (LU)**

(74) Representative: **Office Freylinger
P.O. Box 48
8001 Strassen (LU)**

(54) **ELECTROLYTIC COPPER FOIL HAVING HIGH TENSILE STRENGTH AND SECONDARY BATTERY COMPRISING THE SAME**

(57)   The present invention provides an electrolytic copper foil securing high strength (e.g., tensile strength) characteristics by maintaining an area ratio of fine grains and grain boundaries in the electrolytic copper foil even after high-temperature heat treatment, to an electrode for a secondary battery including the electrolytic copper foil, and to a secondary battery including the electrode.

FIG. 1

EP 4 202 085 A2

**Description**

TECHNICAL FIELD

The present invention relates to an electrolytic copper foil capable of securing high strength (e.g., tensile strength) characteristics by maintaining an area ratio of fine grains and grain boundaries in the electrolytic copper foil even after high-temperature heat treatment, to an electrode for a secondary battery including the electrolytic copper foil, and to a secondary battery including the electrode.

DISCUSSION OF RELATED ART

In general, an electrolytic copper foil is widely used as a basic material of a printed circuit board (PCB) used in the electric/electronic industry. In addition, by improving the physical properties of the electrolytic copper foil, it is widely used as an anode current collector of a secondary battery. Accordingly, the demand for such an electrolytic copper foil is rapidly increasing mainly in small products such as slim notebook computers, personal digital assistants (PDA), e-books, MP3 players, next-generation mobile phones, and ultra-thin flat panel displays.

Such an electrolytic copper foil is prepared in a manner in which sulfuric acid-aqueous solution of copper sulfate is used as an electrolyte, an electrodeposited copper is precipitated on a drum surface by applying a direct current between an anode (e.g., a positive electrode) and a rotating cathode drum (e.g., a negative electrode) immersed in the electrolyte, and the precipitated copper electrodeposits is stripped from the drum surface of the rotating cathode and continuously wound.

Meanwhile, in order to improve charge/discharge cycle characteristics of a lithium secondary battery, there is a demand for a high-strength (e.g., high tensile strength) copper foil that may continuously withstand volume changes and heat generation of a lithium secondary battery, and may not generate fractures or scratches even if a significant volume expansion of an anode material occurs due to charging and discharging or the battery operates at an abnormally high temperature.

TECHNICAL OBJECTIVES

Aspects of embodiments of the present invention are directed to an electrolytic copper foil exhibiting high strength (e.g., tensile strength) characteristics by maintaining an area ratio of fine grains and grain boundaries in the electrolytic copper foil even after high-temperature heat treatment as well as before heat treatment,

Aspects of embodiments of the present invention are further directed to an electrode for a secondary battery including the electrolytic copper foil, and to a secondary battery including the electrode.

Other objectives and advantages of the present invention may be more clearly explained by the following detailed description and claims.

TECHNICAL SOLUTION TO THE PROBLEM

According to the present invention, an electrolytic copper foil includes: a copper layer including one surface and another surface, wherein a deviation between a hit rate (HT) of the electrolytic copper foil measured by electron backscatter diffraction (EBSD) after heat treatment at 200°C for 1 hour and a hit rate (HI) of the electrolytic copper foil before heat treatment is 10 % or less.

In some embodiments, a change ratio of hit rate (RHR) of the electrolytic copper foil between before and after heat treatment according to Equation 1 below may be 10 % or less:

[Equation 1]

$$RHR \ (\text{Ratio of Hit rate, \%}) = \{(H_T - H_I) \, / \, H_I\} \times 100$$

wherein in Equation 1,

$H_T$ is a hit rate of the electrolytic copper foil measured by EBSD after heat treatment, and
$H_I$ is a hit rate of the electrolytic copper foil measured by EBSD before heat treatment.

In some embodiments, the electrolytic copper foil may include a plurality of irregularly crystallized grains, and a change ratio of average grain size between before and after heat treatment according to Equation 2 below may be 35

% or less:

[Equation 2]

$$\text{RGS (Ratio of grain size, \%)} = \{(G_T - G_I) / G_I\} \times 100,$$

wherein in Equation 2,

$G_T$ is an average grain size after heat treatment, and
$G_I$ is an average grain size before heat treatment.

In some embodiments, each of a tensile strength of the electrolytic copper foil after heat treatment and a tensile strength of the electrolytic copper foil before heat treatment may be 45 kgf/mm$^2$ or more.

In some embodiments, a thickness of the electrolytic copper foil may be in a range from 3 to 70 $\mu$m.

In some embodiments, a roughness of each of the one surface and the another surface of the electrolytic copper foil may be in a range from 0.5 to 5.0 $\mu$m, and a difference in surface roughness between the one surface and the another surface may be 2.0 $\mu$m or less.

In some embodiments, the electrolytic copper foil may further include an anti-corrosion layer formed on a surface of the electrolytic copper foil, wherein the anti-corrosion layer may include at least one of chromium (Cr), molybdenum (Mo), nickel (Ni), a silane compound, and a nitrogen compound.

In some embodiments, the electrolytic copper foil may be formed through electroplating in which a current is applied between an electrode plate and a rotating drum which are spaced apart from each other in an electrolyte, and the electrolyte may include 50 to 150 g/l of copper ions, 50 to 150 g/l of sulfuric acid, 1 to 100 ppm of halogen, 0.01 to 1.5 ppm of a brightener, 1 to 10.0 ppm of a low molecular weight gelatin, 0.5 to 3.0 ppm of HEC, and 0.001 to 1.5 ppm of a leveler.

According to an embodiment, the electrolytic copper foil may be applied as an anode current collector for a lithium secondary battery.

According to an embodiment, a secondary battery includes the anode current collector for a lithium secondary battery including the electrolytic copper foil.

EFFECTS OF THE INVENTION

According to one or more embodiments of the present invention, an electrolytic copper foil having high tensile strength characteristics may be obtained by maintaining an area ratio of fine grains and grain boundaries in the electrolytic copper foil before and after heat treatment within a predetermined range or less.

Accordingly, when the high-tensile-strength electrolytic copper foil according to the present invention is used as a current collector for a battery, scratches or warping due to external impacts may not occur during a manufacturing process of and use of the secondary battery, and quality reliability may be continuously maintained. In addition, battery safety and excellent overall performance may be exhibited.

Effects of the present invention are not limited by the contents exemplified above, and more various effects are included in the present specification.

BRIEF DESCRIPTION OF THE DRAWING PORTIONS

FIG. 1 is a cross-sectional view illustrating a structure of an electrolytic copper foil according to an embodiment of the present invention.

FIG. 2 is a cross-sectional view illustrating a structure of an electrolytic copper foil according to another embodiment of the present invention.

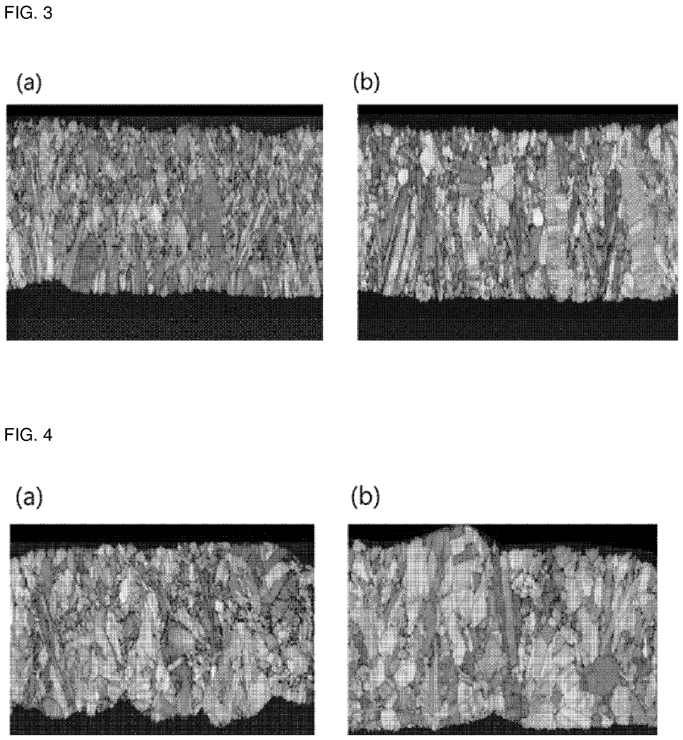

FIG. 3 is an EBSD image illustrating an electrolytic copper foil prepared in Example 1 before (a) and after (b) heat treatment.

FIG. 4 is an EBSD image illustrating the electrolytic copper foil prepared in Comparative Example 1 before (a) and after (b) heat treatment.

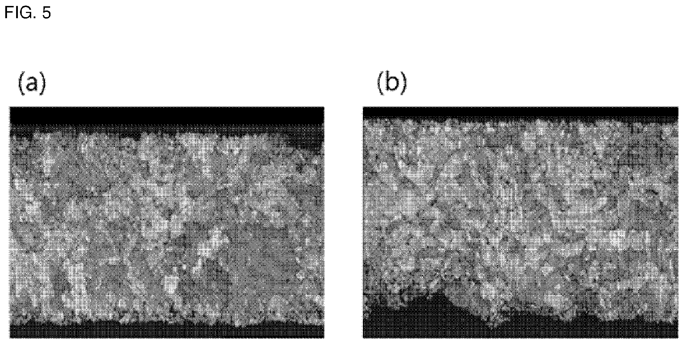

FIG. 5 is an EBSD image illustrating the electrolytic copper foil prepared in Comparative Example 2 before (a) and after (b) heat treatment.

[Reference Numeral]

100: Copper foil
10a: One surface (drum surface)
10b: Another surface (electrolyte surface)
20: Anti-corrosion layer

DETAILED DESCRIPTION OF THE INVENTION

Hereinafter, the present invention will be described in detail.

All terms (including technical and scientific terms) used in this specification may be used in the meaning commonly understood by those of ordinary skill in the art to which the present invention pertains, unless otherwise defined. In addition, terms defined in a commonly used dictionary are not to be interpreted ideally or excessively, unless clearly defined in particular.

In addition, throughout this specification, when a part "includes" or "comprises" a certain element, it is to be understood as an open-ended term that includes the possibility of further including other elements rather than excluding other elements, unless otherwise stated. In addition, throughout the specification, "on" or "above" means not only when it is located on or beneath a target part, but also includes the case where there is another part therebetween, and does not mean that it is located upwardly with respect to the direction of gravity. In the present specification, terms such as "first" and "second" do not indicate any order or importance but are used to distinguish components from each other.

As used herein, "preferred" and "preferably" refer to embodiments of the present invention that may provide certain advantages under certain circumstances. However, other embodiments may also be preferred, under the same or other circumstances. Additionally, the recitation of one or more preferred embodiments does not imply that other embodiments are not useful, nor is it intended to exclude other embodiments from the scope of the invention.

<Electrolytic copper foil>

An example of the present invention is an electrolytic copper foil (e.g., an electrodeposition copper foil) applicable to a current collector of a secondary battery or a copper foil for improving signal loss, for example, a copper clad laminate (CCL), a printed circuit board (PCB), and the like.

In general, an electrolytic copper foil includes a plurality of fine grains having a size of several nanometers (nm), and grain boundaries therebetween. These fine grains and grain boundaries are rather greatly deformed in shape and size as high-temperature heat treatment is performed, but the electrolytic copper foil according to the present invention is differentiated from the conventional electrolytic copper foil in that the electrolytic copper foil according to the present invention continuously maintains an area ratio of the fine grains and grain boundaries to be less than or equal to a predetermined range without significant deformation in terms of its shape and size even after heat treatment.

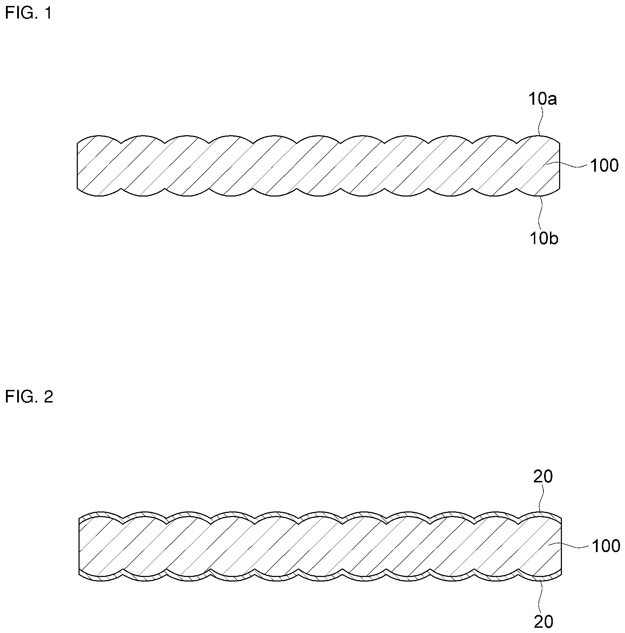

Hereinafter, a structure of an electrolytic copper foil according to the present invention will be described with reference to FIG. 1. FIG. 1 is a cross-sectional view illustrating a structure of an electrolytic copper foil according to the present invention.

Referring to FIG. 1, the electrolytic copper foil 100 includes a copper layer including one surface 10a and another surface 10b, and a deviation (e.g., difference) between a hit rate ($H_T$) of the copper foil measured by electron backscatter diffraction (EBSD) after heat treatment at 200°C for 1 hour and a hit rate ($H_I$) before heat treatment may be 10% or less.

As used herein, the term "hit rate" is defined as a ratio of a specific signal collected within a measurement area of EBSD. For example, the hit rate ($H_T$) of the copper foil after heat treatment may mean a sum of orientation density ratios in plane orientations of [111], [200], and [220] directions obtained from crystal structure analysis by EBSD. In addition, the hit rate ($H_I$) of the copper foil before heat treatment may mean a sum of the orientation density ratios in the [111], [200], and [220] directions obtained under the same conditions.

Electron backscatter diffraction (EBSD) used in calculating the hit rate is a technique of analyzing orientation of a material in a manner where a sample is mounted on a scanning electron microscope (SEM) and an electron (backscattered electrons) reflected when accelerated electrons are injected into a sample is detected. The information obtained from the analysis of grains according to EBSD includes information up to a depth of several 10 nm at which an electron beam penetrates the sample. Such EBSD may be analyzed based on the results of orientation and diffraction patterns of the materials analyzed using a pattern quality map (PQ map) and an inverse pole figure map (IPF map). In such a case, the PQ Map expresses a difference in a signal intensity of electric charges (e.g., electrons, backscattered electrons) reflected from the sample as a difference in contrast (e.g., light and dark), and is generally expressed darkly at grain boundaries because the signal is weak. In addition, the IPF Map expresses a difference in a crystal direction (orientation) of the sample in color. The term "twin" means a plane that is 60° misorientated with respect to a crystal plane of the sample.

Specifically, the electrolytic copper foil includes a plurality of grains that are irregularly crystallized in size and shape in the copper layer, among which fine grains with a size of several nanometers (nm) and grain boundaries positioned at the boundary between them exist. When an electrolytic copper foil, which is a sample, is irradiated with accelerated electrons by EBSD, grains in a predetermined crystal grain form gain energy from electron beams and are reflected to emit secondary electrons, whereas secondary electrons are not emitted in regions of the fine grains and grain boundaries. As such, through a signal ratio of electrons emitted from the measurement area of EBSD, an area ratio of fine grains and grain boundaries in the electrolytic copper foil may be calculated and analyzed. That is, when the hit rate value of the electrolytic copper foil measured by EBSD is low, it means that the area ratio of fine grains and grain boundaries included in the copper foil is high. In particular, in the case of the electrolytic copper foil 100 according to the present invention, the size and shape of fine grains and grain boundaries are continuously maintained within a predetermined range or less without significant deformation even after high-temperature heat treatment.

In addition, by analyzing the hit rate measured by EBSD, it is possible to identify changes in nucleation/growth during heat treatment by identifying the grain boundaries, fine grains, or amorphous portions. That is, if there is no change between before and after heat treatment, nucleation and growth hardly occur, so a change in hit rate value is small, and high tensile strength characteristics are maintained. Accordingly, it is possible to control the change in physical properties of the copper foil by analyzing the change in the hit rate, which is a factor that hinders the nucleation/growth.

Since the above-described hit rate deviation and a change ratio of hit rate (RHR) parameter between before and after heat treatment are unique properties of the electrolytic copper foil according to the present invention, they may correspond to novel technical characteristics that distinguish the electrolytic copper foil of the present invention from the conventional electrolytic copper foil. In such a case, the hit rate measured from tissue analysis by EBSD is based on measurement of a cross-section of the copper foil along a thickness direction of the copper foil. Such a hit rate may have some different values depending on the EBSD measurement method and the measurement conditions.

For example, a deviation between a hit rate ($H_T$) of the electrolytic copper foil 100 measured by electron backscatter diffraction (EBSD) after heat treatment at 200°C for 1 hour and a hit rate ($H_I$) of the electrolytic copper foil 100 before heat treatment may be 10 % or less, and specifically 8 % or less. In such a case, a lower limit of the hit rate deviation of the copper foil between before and after heat treatment is not particularly limited, and may be, for example, 0 or more.

The hit rate deviation of the copper foil between before and after heat treatment may be expressed as a change ratio of hit rate (RHR) according to Equation 1 below. For example, a change ratio of hit rate (RHR) of the electrolytic copper foil between before and after heat treatment may be 10 % or less, specifically 9.5 % or less, and more specifically 9.0 % or less. In such a case, a lower limit of the change ratio of hit rate (RHR) of the copper foil between before and after heat treatment is not particularly limited, and may be 0 or more, for example.

[Equation 1]

$$RHR \ (Ratio \ of \ Hit \ rate, \ \%) = \{(H_T - H_I) \ / \ H_I\} \times 100$$

In Equation 1,

$H_T$ is a hit rate of the electrolytic copper foil measured by EBSD after heat treatment, and
$H_I$ is a hit rate of the electrolytic copper foil measured by EBSD before heat treatment.

In the case of the electrolytic copper foil of the present invention that satisfies the hit rate deviation between before and after heat treatment and its change ratio of hit rate (RHR) value, high strength (e.g., tensile strength) may be maintained even after heat treatment, and thus quality reliability may be continuously exhibited when applied to the battery. In particular, it is preferably applied to a laminated battery having excellent shape retention and easy handling, specifically, a prismatic or pouch-type battery. In addition, it also falls within the scope of the present invention to apply it as a copper foil for a CCL or a PCB.

In an embodiment, the electrolytic copper foil 100 of the present invention exhibits a continuously high value of a change ratio of average grain size after a predetermined heat treatment, and generally has a change ratio of average grain size of 20 % or more. On the other hand, an area ratio of fine grains and grain boundaries in the copper layer is maintained within a predetermined range or less, and thus high tensile strength may be secured even after heat treatment.

For example, the electrolytic copper foil 100 includes a plurality of irregularly crystallized grains, and the change ratio of average grain size between before and after heat treatment according to Equation 2 below may be 35 % or less, and specifically 33 % or less:

[Equation 2]

$$\text{RGS (Ratio of grain size, \%)} = \{(G_T - G_I) / G_I\} \times 100,$$

where in Equation 2,

$G_T$ is an average grain size after heat treatment, and
$G_I$ is an average grain size before heat treatment.

For example, an average grain size of the copper foil after heat treatment may be 120 to 150 % larger than an average grain size of the copper foil before heat treatment. Specifically, the average grain size after heat treatment may be in a range from 0.5 to 2.0 $\mu$m, and the average grain size before heat treatment may be in a range from 0.3 to 1.5 $\mu$m.

For another example, each of a tensile strength of the electrolytic copper foil 100 after heat treatment at 200°C for 1 hour and a tensile strength of the electrolytic copper foil 100 before heat treatment may be 45 kgf/mm$^2$ or more, specifically in a range from 45 to 80 kgf/mm$^2$, and more specifically in a range from 45 to 70 kgf/mm$^2$.

The electrolytic copper foil 100 according to the present invention may be an electrolytic copper foil prepared through a foil forming process by an electroplating method in which, for example, one surface of the electrolytic copper foil 100 has a shiny surface (e.g., an "S surface," a drum surface, etc.) 10a which has a relatively low roughness and thus has a high gloss, and another surface of the copper foil has a matte surface (e.g., an "M surface", an electrolyte surface, etc.) 10b which has a relatively high roughness due to so-called mountain structures and thus has a low gloss.

In such a case, a bonding force with an active material and a yield of the battery may greatly vary depending on a surface state of the electrolytic copper foil 100 which is used as the current collector. For example, when surface non-uniformity due to the surface roughness of the copper foil is too high, there is a problem in that a discharge-capacity retention rate of the secondary battery is lowered, and on the other hand, when the surface of the copper foil is too uniform, it may be difficult to secure the binding force between the current collector and the active material, and thus the active material may be desorbed from the current collector during operation of the secondary battery, thereby causing problems such as an internal short circuit. In addition, according to a state of the copper foil, a difference in a coating amount of the active material between the opposite surfaces may be caused. The non-uniform coating amount between the opposite surfaces may cause a problem that a capacity of the electrode may decrease and/or unstable behavior of the electrode may occur due to a difference in deformation between the opposite surfaces of the current collector. Accordingly, in an embodiment of the present invention, by adjusting the surface roughness of the opposite surfaces of the electrolytic copper foil 100 to a predetermined range, it is possible to secure required physical properties of the electrolytic copper foil 100 as a current collector, that is, an excellent bonding strength with the active materials and a high discharge capacity retention rate.

In an example, the electrolytic copper foil 100 includes a drum surface (e.g., one surface, 10a) and an electrolyte surface (e.g., another surface, 10b), and a surface roughness of the opposite surfaces 10a and 10b may be approximately in a range from 0.5 to 5.0 $\mu$m, in terms of Rz (ten-point average roughness), and specifically in a range from 1.0 to 4.0 $\mu$m. More specifically, the surface roughness of the drum surface (e.g., S surface, 10a) of the copper foil may be in a range from 1.0 to 2.5 $\mu$m, and the surface roughness of the electrolyte surface (e.g., M surface 10b) may be in a range from 1.0 to 2.5 $\mu$m.

In another example, a difference in surface roughness between the drum surface 10a and the electrolyte surface 10b of the electrolytic copper foil 100 may be 2.0 $\mu$m or less, and specifically, 1.0 $\mu$m or less.

In addition, a thickness of the electrolytic copper foil 100 may have a typical thickness range known in the art, for example, in a range from 3 $\mu$m to 70 $\mu$m. Specifically, it may be in a range from 3 to 20 $\mu$m (a high tensile strength (HTS) copper foil), but the present invention is not particularly limited thereto. When the thickness of the electrolytic copper foil 100 is too thin to be less than about 3 $\mu$m, it is difficult to handle the copper foil in a process of manufacturing the battery, lowering the workability, and on the other hand, when the thickness of the electrolytic copper foil 100 exceeds about 70 $\mu$m, it is difficult to manufacture a high-capacity battery because volume and weight may increase due to a thickness of a current collector when the electrolytic copper foil 100 is used as a current collector.

The electrolytic copper foil 100 according to an embodiment of the present invention is not particularly limited in terms of, for example, components, composition, and/or structure constituting the copper foil, as long as the hit rate deviation between before and after heat treatment and the change ratio of hit rate parameter and related characteristics are satisfied.

The electrolytic copper foil 100 may include or be formed of conventional copper or a copper alloy known in the art, and a metal component included in the alloy is not particularly limited, and a conventional metal known in the art may be used. For example, the copper foil may be a high tensile strength (HTS) copper foil, but embodiments are not particularly limited thereto. The electrolytic copper foil 100 may be in the shape of a foil, specifically, may be a flat copper foil.

In an example, the electrolytic copper foil 100 is preferably an electro-deposition copper foil formed through electroplating in which a current is applied between an electrode plate and a rotating drum which are spaced apart from each other in an electrolyte. The electrolyte may have a composition including 50 to 150 g/l of copper ions, 50 to 150 g/l of sulfuric acids, 1 to 100 ppm of halogens, 0.01 to 1.5 ppm of brighteners, 1 to 10.0 ppm of low molecular weight gelatins, 0.5 to 3.0 ppm of HEC, and 0.001 to 1.5 ppm of levelers, but embodiments are not particularly limited thereto.

In addition, unless otherwise specified, the above-described physical properties may be based on a thickness in a range from 3 to 70 μm of the copper foil. However, embodiments of the present invention are not limited to the above-described thickness range, and may be appropriately adjusted within a typical thickness range known in the art.

In an embodiment, referring to FIG. 2, the electrolytic copper foil 100 according to an embodiment of the present invention may include an anti-corrosion layer 20 formed on the surfaces 10a and 10b thereof.

The anti-corrosion layer 20 is selectively formed on the surfaces 10a and 10b of the electrolytic copper foil 100 to prevent corrosion (e.g., rust). The anti-corrosion layer 20 may include conventional inorganic corrosion-resistant (e.g., rust-preventive) materials, organic corrosion-resistant materials, or mixtures thereof known in the art, for example, at least one or more of chromium (Cr), molybdenum (Mo), nickel (Ni), a silane compound, and a nitrogen compound.

In such a case, the nitrogen compound may include at least one or more of common triazole compounds and amine compounds known in the art. The applicable triazole compound may be selected from, for example, benzotriazole, tolyltriazole, carboxybenzotriazole, chlorobenzotriazole, ethylbenzotriazole and naphthotriazole. In addition, available amine compounds may be selected from, for example, amide, acrylamide, acetamide, auramine, dodecyltrimethyl ammonium bromide (DTAB) and diethylenetriamine (DETA).

The anti-corrosion layer 20 may serve to impart not only the anti-corrosion properties to the electrolytic copper foil 100 described above, but also heat-resistance properties and/or properties to increase a bonding strength with active materials.

The electrolytic copper foil 100 according to an embodiment of the present invention may be prepared through a conventional electrolytic foil-forming apparatus, but embodiments are not particularly limited thereto. For example, a drum, which serves as a cathode, and an anode are installed in a container to which an electrolyte is continuously supplied, and a current is applied in a state that the drum and the anode are spaced apart from each other so that the electrolyte may be interposed therebetween. In such a case, as the drum rotates, an electrolytic copper foil is electro-deposited on a surface of the drum, and then it is wound through a guide roll.

In such a case, a conventional electroplating electrolyte component known in the art may be used as the electrolyte without particular limitation, and may include, for example, copper sulfate, sulfuric acid and a trace amount of chlorine as main components and may include at least one conventional plating additive.

As the additive, additives commonly used in the electroplating field may be used without limitation, and examples thereof may include an accelerator, a brightener, a smoothing agent, a suppressor (e.g., inhibitor), or a mixture thereof.

The accelerator/brightener is added to give gloss to a plating surface and to obtain a fine plating layer, and may include, for example, organic substances including disulfide bond (-S-S-) and a mercapto group (-SH) or a sulfonate-based additive including sulfide. Specific examples thereof may include at least one of 3-mercaptopropyl sulfonate (MPS), bis-(3-sulfopropyl)-disulfide (SPS), 3-N,N-dimethlyamonodithiocarbamoy-1-propanesulfonic acid (DPS), and polymethyldithiocarbonic amine-sulfopropylsulfonate (PTA).

The suppressor/carrier adsorbs on a surface to slow the electroplating by interfering with the access of copper ions, and is a component added to realize stable low roughness. For example, polymer-based organic compounds such as hydroxyethyl cellulose (HEC), polyethylene glycols (PEG), polypropylene glycols (PPG), polyvinyl alcohols, low molecular weight gelatin (molecular weight: about 1,000 to 10,000), cellulose-based additives, and collagen , or a mixture thereof may be used. In addition, an organic material including a polyether-based polymer material and a functional group including a nitrogen atom, a sulfosuccinate-based surfactant, and/or an ethandiamineoxirane-based surfactant may be used.

The leveler/flattener is a component added to obtain a flat (e.g., planar), low-roughness copper foil by removing surface steps. For example, low molecular weight nitrides (e.g., thiourea series, amides, benzimidazole series, benthiazol series, dimethyl aniline, etc.) may be used, and specifically, thiourea, JGB (Janus Green B), PEI, 3-(benzothiazolyl- 2-mercapto)-propyl-sulfonic acid may be used.

In an example, the electrolyte includes, for example, 50 to 150 g/l of copper ions, 50 to 150 g/l of sulfuric acid, and 1 to 50 ppm of halogens, 0.01 to 1.5 ppm of at least one additive for increasing a grain size after heat treatment is further included, and at least one additive suppressing the growth of the grain size after heat treatment is further added in a controlled amount of 0.001 to 1.5 ppm.

In the present invention, the additive for increasing the grain size after heat treatment may include at least one of a brightener and an accelerator. In addition, the additive for suppressing the growth of the grain size after heat treatment may include a leveler or the like.

A specific composition of the at least one additive added to the electrolyte may include 0.01 to 1.5 ppm of the brightener, 1 to 10.0 ppm of the low molecular weight gelatin, 0.5 to 3.0 ppm of HEC, and 0.001 to 1.5 ppm of the leveler.

In addition, the electroplating conditions applied at the time of electrodeposition of the electrolytic copper foil are not particularly limited, and may be appropriately adjusted within a range known in the art. For example, a current density may be in a range from 30 ASD (A/dm$^2$) to 100 ASD. In addition, a temperature of the electrolyte may be in a range from 40 to 70°C, and specifically in a range from 45 to 70°C.

Factors such as a difference in surface roughness between the M surface (e.g., 10a) and the S surface (e.g., 10b) of the copper foil may be controlled by controlling the composition of the above-described electrolyte, current density, temperature, type and/or content of the additives.

<Electrode>

Another embodiment of the present invention is an electrode for secondary batteries including the above-described electrolytic copper foil as a current collector.

In a lithium secondary battery, for example, a foil including aluminum (Al) is generally used as a cathode (e.g., positive electrode) current collector combined with a cathode active material, and a foil including copper (Cu) is generally used as an anode (e.g., negative electrode) current collector combined with an anode active material. Accordingly, in the present invention, a case in which the electrolytic copper foil 100 is applied as an anode current collector will be described.

In an example, the anode includes the above-mentioned electrolytic copper foil; and an anode active material layer disposed on the electrolytic copper foil.

The anode active material layer includes an anode active material, and may further include a conventional binder and/or a conductive material known in the art.

The anode active material is not particularly limited as long as it is a compound capable of intercalation and deintercalation of ions. Non-limiting examples of applicable anode active materials may include, but may not be limited to, carbon-based and silicon-based anode active materials, and in addition, lithium metal or alloys thereof, and other metal oxides such as $TiO_2$, $SnO_2$ and $Li_4Ti_5O_{12}$ capable of occluding and releasing lithium and having an electric potential of less than 2 V with respect to lithium may be used.

Since a method of manufacturing an electrode for secondary batteries using the above-described electrolytic copper foil is known to those skilled in the art to which the present invention pertains, a detailed description thereof will be omitted.

<Secondary battery>

A secondary battery according to another embodiment of the present invention includes an anode (e.g., negative electrode) including the above-described electrolytic copper foil.

The secondary battery may be a lithium secondary battery, and specifically, may include a lithium metal secondary battery, a lithium ion secondary battery, a lithium polymer secondary battery, a lithium ion polymer secondary battery, or the like.

In an example, the lithium secondary battery may include a cathode (e.g., positive electrode) including a cathode active material; an anode (e.g., negative electrode) including an anode active material; and an electrolyte interposed between the cathode and the anode. In addition, a separator may further be included.

The lithium secondary battery according to an embodiment of the present invention may be manufactured according to conventional methods known in the art, for example, by interposing a separator between the cathode and the anode and then introducing the electrolyte to which the electrolyte additive is added.

The electrolyte may include conventional lithium salts known in the art; and an electrolyte solvent.

As the separator, a porous separator, for example, a polypropylene-based, polyethylene-based, or polyolefin-based porous separator may be used, or an organic/inorganic composite separator including an inorganic material may be used.

Hereinafter, the present invention will be described in detail through embodiments. However, the following embodiments are only to illustrate the present invention, and the present invention is not limited by the following embodiments.

[Examples 1 and 2]

[Example 1]

For preparation of the electrolyte, it was adjusted to a copper ion concentration of 100 g/l, a sulfuric acid concentration of 100 g/l, and a chlorine concentration of 30 ppm at a temperature of 55°C. As the additives, low molecular weight gelatin (molecular weight 3,000), hydroxyethyl cellulose (HEC), 3-mercaptopropyl sulfonate (MPS) as the brightener, and thiourea as the leveler were used, and they were added with contents as shown in Table 1 below. In addition, the plating was carried out at a current density of 60 A/dm$^2$ to prepare a plating with a thickness of 20 μm according to the drum speed adjustment. Then, chromium (Cr) treatment was performed through immersion in a small tank to give anti-rust ability.

The prepared electrolytic copper foil was sampled in three places (left, middle, right) with a full width (1300 mm * 500 mm), and the physical properties of the electrolytic copper foil were measured as in the following Experimental Examples. In addition, after heat treatment at 200°C for 1 hour, the physical properties of the electrolytic copper foil were measured as in the following Experimental Examples.

[Example 2]

An electrolytic copper foil of Example 2 was prepared in the same manner as in Example 1, except that the contents of the low molecular weight gelatin, HEC, brightener, and leveler as the additives to be added to the electrolyte were changed as shown in Table 1 below. Then, in the same manner as in Example 1, the physical properties of the electrolytic copper foil before and after heat treatment were measured, respectively, based on 20 μm.

| | Additives (ppm) | | | | Tensile strength (kgf/mm$^2$) | |
|---|---|---|---|---|---|---|
| | Low molecular weight gelatin | HEC | Brightener | Leveler | Before heat treatment | After heat treatment |
| Ex. 1 | 3.5 | 2.0 | 0.7 | 0.2 | 67 | 65 |
| Ex. 2 | 7.0 | 2.0 | 0.05 | 0.02 | 48 | 47 |
| Comp. Ex. 1 | 3.5 | 2.0 | 0.05 | 0.02 | 36 | 32 |
| Comp. Ex. 2 | 3.5 | 2.0 | 0.7 | 0.02 | 32 | 30 |
| Comp. Ex. 3 | 3.5 | 4.0 | 0.7 | 0.02 | 33 | 31 |

[Comparative Examples 1 to 3]

Electrolytic copper foils of Comparative Examples 1 to 3 were prepared in the same manner as in Example 1, except that the contents of the low molecular weight gelatin, HEC, brightener, and leveler as the additive added to the electrolyte were changed as shown in the above Table 1. Then, in the same manner as in Example 1, the physical properties of the electrolytic copper foil before and after heat treatment were measured, respectively.

[Experimental Example: Evaluation of physical properties of electrolytic copper foil]

The physical properties of the electrolytic copper foils prepared in Examples 1 and 2 and Comparative Examples 1 to 3 were evaluated in the following manner, and the results are shown in Table 2 below.

<Method for evaluating physical properties>

(1) Thickness measurement

A thickness was measured by a unit basis weight method, which is a typical thickness measurement method of copper foil (IPC-TM-650 2.2.12).

(2) Average grain size measurement

Bruker's EBSD equipment was used, and an average grain size was analyzed by performing EBSD analysis of a cross-section of the electrolytic copper foil along a thickness direction. In the analysis of the EBSD average grain size, a minimum pixel size was set to 100 nm or less, and a magnification was set to 10,000 times, and the analysis was conducted based on the results of orientation and diffraction patterns of materials analyzed using a pattern quality map (PQ map) and an inverse pole figure map (IPF map).

(3) Tensile strength measurement

A tensile strength (MPa) was measured using UTM (Instron, model name: 5942) in accordance with IPC-TM-650 2.4.18 standard.

(4) Hit rate measurement

Bruker's EBSD equipment was used, and a minimum pixel size was set to 100 nm or less, and a magnification was set to 10,000 times. Analysis was conducted based on the results of orientation and diffraction patterns of materials analyzed using a pattern quality map (PQ map) and an inverse pole figure map (IPF map).

[Table 2]

| | | Grain size ($\mu$m, including twins) | | Hit rate | | | Tensile strength (kgf/mm$^2$) |
|---|---|---|---|---|---|---|---|
| | | Average grain size | Change ratio | Hit rate | Deviation | Change ratio | |
| Ex.1 | Before heat treatment | 0.8 | 31% | 61.3% | 0.6% | 1.0% | 67 |
| | After heat treatment | 1.05 | | 61.9% | | | 65 |
| Ex. 2 | Before heat treatment | 1.12 | 30% | 67.9% | 5.6% | 8.2% | 48 |
| | After heat treatment | 1.46 | | 73.5% | | | 47 |
| Comp. Ex. 1 | Before heat treatment | 1.45 | 34% | 73.3% | 13.4% | 18.3% | 36 |
| | After heat treatment | 1.94 | | 86.7% | | | 32 |
| Comp. Ex. 2 | Before heat treatment | 2.36 | 30% | 72.3% | 11.2% | 15.5% | 32 |
| | After heat treatment | 3.07 | | 83.5% | | | 30 |
| Comp. Ex. 3 | Before heat treatment | 2.72 | 22% | 73.4% | 11.5% | 15.7% | 33 |
| | After heat treatment | 3.36 | | 83.6% | | | 31 |

**Claims**

**1.** An electrolytic copper foil comprising:

a copper layer including one surface and another surface,
wherein a deviation between a hit rate ($H_T$) of the electrolytic copper foil measured by electron backscatter diffraction (EBSD) after heat treatment at 200°C for 1 hour and a hit rate ($H_I$) of the electrolytic copper foil before heat treatment is 10 % or less.

2. The electrolytic copper foil of claim 1, wherein a change ratio of hit rate (RHR) of the electrolytic copper foil between before and after heat treatment according to Equation 1 below is 10 % or less:

$$[\text{Equation 1}]$$

$$\text{RHR (Ratio of Hit rate, \%)} = \{(H_T - H_I) / H_I\} \times 100$$

wherein in Equation 1,

$H_T$ is a hit rate of the electrolytic copper foil measured by EBSD after heat treatment, and
$H_I$ is a hit rate of the electrolytic copper foil measured by EBSD before heat treatment.

3. The electrolytic copper foil of claim 1 or 2, wherein the electrolytic copper foil comprises a plurality of irregularly crystallized grains, and
a change ratio of average grain size between before and after heat treatment according to Equation 2 below is 35 % or less:

$$[\text{Equation 2}]$$

$$\text{RGS (Ratio of grain size, \%)} = \{(G_T - G_I) / G_I\} \times 100,$$

wherein in Equation 2,

$G_T$ is an average grain size after heat treatment, and
$G_I$ is an average grain size before heat treatment.

4. The electrolytic copper foil of claim 3, wherein the average grain size after heat treatment is in a range from 0.5 to 2.0 $\mu$m, and
the average grain size before heat treatment is in a range from 0.3 to 1.5 $\mu$m.

5. The electrolytic copper foil of any of the preceding claims, wherein each of a tensile strength of the electrolytic copper foil after heat treatment and a tensile strength of the electrolytic copper foil before heat treatment is 45 kgf/mm$^2$ or more.

6. The electrolytic copper foil of any of the preceding claims, wherein a thickness of the electrolytic copper foil is in a range from 3 to 70 $\mu$m.

7. The electrolytic copper foil of any of the preceding claims, wherein a roughness of each of the one surface and the another surface of the electrolytic copper foil is in a range from 0.5 to 5.0 $\mu$m, and
a difference in surface roughness between the one surface and the another surface is 2.0 $\mu$m or less.

8. The electrolytic copper foil of any of the preceding claims, further comprising an anti-corrosion layer formed on a surface of the electrolytic copper foil,
wherein the anti-corrosion layer comprises at least one of chromium (Cr), molybdenum (Mo), nickel (Ni), a silane compound, and a nitrogen compound.

9. The electrolytic copper foil of any of the preceding claims, wherein the electrolytic copper foil is formed through electroplating in which a current is applied between an electrode plate and a rotating drum which are spaced apart from each other in an electrolyte, and
the electrolyte comprises 50 to 150 g/l of copper ions, 50 to 150 g/l of sulfuric acid, 1 to 100 ppm of halogen, 0.01 to 1.5 ppm of a brightener, 1 to 10.0 ppm of a low molecular weight gelatin, 0.5 to 3.0 ppm of HEC, and 0.001 to 1.5 ppm of a leveler.

10. The electrolytic copper foil of any of the preceding claims, applied as an anode current collector for a lithium secondary battery.

11. An electrode for a secondary battery, comprising:

the copper foil of any one of claims 1 to 10, and
an active material layer disposed on the copper foil.

12. A secondary battery comprising the electrode of claim 11.

FIG. 1

FIG. 2

FIG. 3

(a)

(b)

FIG. 4

(a)

(b)

FIG. 5

(a)

(b)